(19) Europäisches Patentamt
European Patent Office
Office européen des brevets

(11) **EP 1 248 101 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**29.09.2010 Patentblatt 2010/39**

(51) Int Cl.:
**_G01N 27/416_** _(2006.01)_

(45) Hinweis auf die Patenterteilung:
**28.02.2007 Patentblatt 2007/09**

(21) Anmeldenummer: **02007716.0**

(22) Anmeldetag: **05.04.2002**

(54) **Vorrichtung und Verfahren zum Messen der Konzentration von Ionen in einer Messflüssigkeit**

Apparatus and method for measuring the concentration of ions in a liquid

Appareil et procédé pour mesurer la concentration d'ions dans un liquide

(84) Benannte Vertragsstaaten:
**AT BE CH CY DE DK ES FI FR GB GR IE IT LI LU MC NL PT SE TR**

(30) Priorität: **07.04.2001 DE 10117627**

(43) Veröffentlichungstag der Anmeldung:
**09.10.2002 Patentblatt 2002/41**

(73) Patentinhaber: **Endress + Hauser Conducta Gesellschaft für Mess- und Regeltechnik mbH + Co.KG.**
**70839 Gerlingen (DE)**

(72) Erfinder:
• **Gehrke, Martin**
  **71384 Weinstadt (DE)**
• **Wittmer, Detlev, Dr.**
  **75433 Maulbronn (DE)**

(74) Vertreter: **Hahn, Christian**
**Endress + Hauser**
**(Deutschland)AG +Co. KG**
**PatServe**
**Colmarer Strasse 6**
**79576 Weil am Rhein (DE)**

(56) Entgegenhaltungen:
**EP-A- 0 419 769      EP-A1- 0 452 276**
**US-A- 4 227 988      US-A- 4 506 226**
**US-A- 4 851 104      US-A- 5 431 789**
**US-A- 5 466 356**

• **'pH-/Redox-Messung mypro CPM 431'**
  **INFORMATIONSBROCHÜRE DER**
  **ENDRESS+HAUSER MESSTECHNIK GMBH+CO**

Bemerkungen:
Die Akte enthält technische Angaben, die nach dem Eingang der Anmeldung eingereicht wurden und die nicht in dieser Patentschrift enthalten sind.

**EP 1 248 101 B2**

**Beschreibung**

Die vorliegende Erfindung betrifft eine symmetrisch beschaltete Vorrichtung zum Messen der Konzentration von Ionen, insbesondere von Wasserstoff (H$^+$)-Ionen, in einer Messflüssigkeit. Die Vorrichtung umfasst eine in der Messflüssigkeit angeordneten pH-sensitive Messelektrode, eine in der Messflüssigkeit angeordnete Referenzelektrode, eine in der Messflüssigkeit angeordneten Bezugselektrode, die die Messflüssigkeit auf eine vorgebbare Bezugsmasse legt, und Mittel zum Bilden eines auf die Bezugsmasse bezogenen Differenzsignals aus der Differenz zwischen einem Messsignal der Messelektrode und einem Referenzsignal der Referenzelektrode. Das Differenzsignal ist abhängig von der Ionenkonzentration in der Messflüssigkeit.

Die Erfindung betrifft auch ein Verfahren zum Messen des pH-Werts in einer Messflüssigkeit. Im Rahmen des Verfahrens wird von einer in der Messflüssigkeit angeordneten pH-sensitiven Messelektrode ein Messsignal und von einer in der Messflüssigkeit angeordneten Referenzelektrode ein Referenzsignal aufgenommen. Die Messflüssigkeit wird von einer in der Messflüssigkeit angeordneten Bezugselektrode auf eine vorgebbare Bezugsmasse gelegt. Aus der Differenz zwischen dem Messsignal und dem Referenzsignal wird ein auf die Bezugsmasse bezogenes und von dem pH-Wert in der Messflüssigkeit abhängiges Differenzsignal gebildet.

Schließlich betrifft die vorliegende Erfindung ein Speicherelement für eine Steuerungseinheit einer Vorrichtung zum Messen des pH-Werts in einer Messflüssigkeit. Auf dem Speicherelement ist ein Computerprogramm abgespeichert, das auf einem Rechengerät, insbesondere einem Mikroprozessor, der Steuerungseinheit ablauffähig ist. Das Speicherelement ist insbesondere als ein Read-Only-Memory, als ein Random-Access-Memory oder als ein Flash-Memory ausgebildet.

Messvorrichtungen der eingangs genannten Art werden üblicherweise zur Messung des pH-Werts einer Messflüssigkeit verwendet. Der pH-Wert wird von einer Vielzahl in der Messflüssigkeit gelöster Inhaltsstoffe bestimmt, bspw. von der Konzentration der H$^+$-Ionen oder der OH$^-$-Ionen.

Aus dem Stand der Technik sind Messvorrichtungen zum Messen der Ionenkonzentration in einer Messflüssigkeit in unterschiedlichen Ausführungsformen bekannt. So kann der pH-Wert einer Messflüssigkeit über unsymmetrisch beschaltete Messketten oder über symmetrisch beschaltete Messketten erfasst werden. Die unsymmetrisch beschaltete Messkette umfasst eine an einer in der Messflüssigkeit angeordnete Bezugsmasse anliegende Referenzelektrode und eine in der Messflüssigkeit angeordnete pH-sensitive Messelektrode, bspw. eine Glaselektrode oder Halbleiterelektrode. An dem Ausgang der Messelektrode wird ein auf die Bezugsmasse bezogenes Messsignal erfasst. Das Messsignal ist abhängig von der Ionenkonzentration in der Messflüssigkeit.

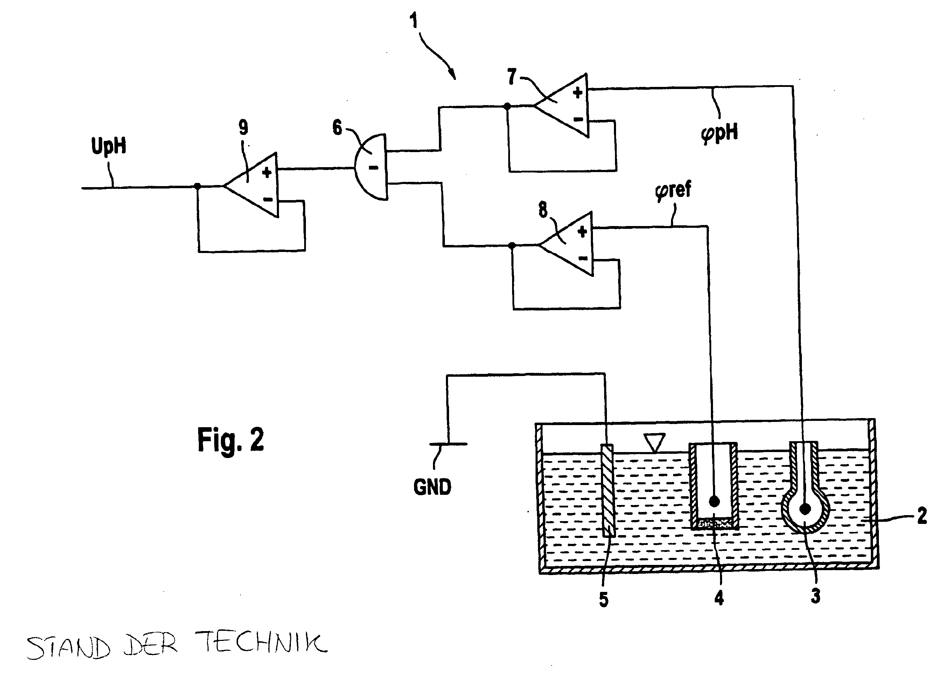

Eine aus dem Stand der Technik bekannte symmetrisch beschaltete Vorrichtung zum Messen der Ionenkonzentration ist in Figur 2 in ihrer Gesamtheit mit dem Bezugszeichen 1 bezeichnet. Die Vorrichtung 1 umfasst eine in einer Messflüssigkeit 2 angeordnete pH-sensitive Messelektrode 3, eine in der Messflüssigkeit 2 angeordnete Referenzelektrode 4 und eine in der Messflüssigkeit 2 angeordnete Bezugselektrode 5. Durch die Bezugselektrode 5 wird die Messflüssigkeit 2 auf eine vorgebbare Bezugsmasse GND gelegt. Die Vorrichtung 1 umfasst des weiteren einen Subtrahierer 6 zum Bilden eines auf die Bezugsmasse GND bezogenen Differenzsignals UpH aus der Differenz zwischen einem Messsignal φpH der Messelektrode 3 und einem Referenzsignal φref der Referenzelektrode 4. Das Differenzsignal UpH ist abhängig von der Ionenkonzentration in der Messflüssigkeit 2 bzw. dem pH-Wert der Messflüssigkeit 2. Das Messsignal φpH und das Referenzsignal φref sind als Potentiale ausgebildet. Sie werden jeweils über einen als Impedanzwandler oder Spannungsfolger beschalteten Operationsverstärker 7, 8 geführt. Das Ausgangssignal des Subtrahierers 6 wird ebenfalls über einen als Impedanzwandler oder Spannungsfolger beschalteten Operationsverstärker 9 geführt. Die Operationsverstärker 7, 8, 9 dienen zur Gleichtaktunterdrückung, d. h. zur Verringerung der Störanfälligkeit der Vorrichtung 1. Ein üblicher Operationsverstärker weist eine Gleichtaktunterdrückung von etwa 80 bis 90 dB auf. Das bedeutet, dass bei einem angenommenen zulässigen Fehler am Ausgang eines Operationsverstärkers von 1 mV, am Eingang eine Spannungsschwankung von bis zu 10 V auftreten kann.

Bei den aus dem Stand der Technik bekannten Vorrichtungen zum Messen des pH-Werts einer Messflüssigkeit, werden Spannungsschwankung bspw. durch elektrochemische Störpotentiale, die sich zwischen der Bezugselektrode und der Messflüssigkeit einstellen, oder durch sonstige z.B. auf die Meßleitung eingekoppelte Störungen, hervorgerufen. Die Größe eines Störpotentials ist abhängig von dem verwendeten Material der Bezugselektrode und von der Zusammensetzung der Messflüssigkeit. Die Bezugselektrode besteht bspw. aus Edelstahl oder aus Tantal. Das Störpotential addiert sich auf das Messsignal und das Referenzsignal gleichermaßen. Durch die bei der symmetrischen Beschaltung vorgesehene Differenzbildung wird das Störpotential eliminiert, so dass es sich nicht auf das Ausgangssignal der Vorrichtung auswirkt. Das Störpotential führt jedoch zu einem Anstieg der in den Spannungsfolgern zu verarbeitenden einzelnen Potentiale. Das Störpotential geht direkt in den Aussteuerbereich der Spannungsfolger für die beiden Potentiale und in den nachfolgenden Subtrahierer ein. Der elektrochemische Offset kann bis zu +/-1,4 V betragen, in Extremfällen sogar bis zu +/-2,8 V.

Mit der zunehmenden Miniaturisierung von elektronischen Bauteilen im allgemeinen geht, insbesondere zur Reduzierung der Abwärme von aktiven Bauteilen, auch eine Verringerung der Versorgungsspannung einher. Moderne ASICs (Application Specific Integrated Circuits) z.B. werden inzwischen mit Versorgungsspannungen betrieben, die bei Vcc = 3 V liegen oder sogar darunter. Bei diesen Schaltungen ist auch der Gleichtaktbereich auf +/-3 V begrenzt. Wenn ein Störpotential bzw. ein elektrochemischer Offset im Bereich der Versorgungsspannung liegt, kann es im Verlauf der Messung des pH-Werts zu einem Überschreiten des Gleichtaktbereichs kommen. Eine Eingangsschaltung ist dann nicht mehr in der Lage, die Differenzspannung linear zu übertragen und es kann zu erheblichen Messabweichungen kommen. Zusätzlich kann des Messsignal die Ansteuergrenze erreichen und einfach auf einen bestimmten Wert, bspw. 3 V, abgeschnitten werden. Für den Fall, dass eine analoge Subtrahierschaltung die Differenz der beiden Potentiale bildet, kann ein nachfolgendes Meßinstrument oder ein nachfolgender A/D-Wandler keinen Unterschied zwischen einem kleiner werdenden pH-Wert und einem Abschneiden (sog. Clipping) der Potentiale erkennen. Eine Messung ist nicht mehr möglich.

Der vorliegenden Erfindung liegt deshalb die Aufgabe zugrunde, trotz kleiner Versorgungsspannungen von elektrischen Bauteilen, insbesondere bei Versorgungsspannung von unter 4 V, dennoch eine genaue und zuverlässige Messung des pH-Werts in einer Messflüssigkeit mit einer symmetrisch beschalteten pH-Messvorrichtung zu ermöglichen. Die Aufgabe wird erfindungsgemäß gelöst durch die Vorrichtung gemäß Anspruch 1 und das Verfahren gemäß Anspruch 5.

Zur Lösung dieser Aufgabe werden für die Messvorrichtung der eingangs genannten Art erfindungsgemäß Kompensationsmittel zum Kompensieren eines Störpotentials vorgeschlagen, das sich zwischen der Bezugselektrode und der Messflüssigkeit einstellt.

Mit Hilfe der Kompensationsmittel kann einer entscheidenden Ursache für das Clipping, nämlich dem Erreichen einer Versorgungsspannungsgrenze, entgegengewirkt werden. Die Kompensation des Störpotentials kann dadurch erfolgen, dass ein an der Bezugselektrode anliegendes Bezugspotential auf das negative Störpotential eingestellt wird. Bei der erfindungsgemäßen Vorrichtung erfolgt die Kompensation dadurch, dass eine Summe aus Bezugspotential und Störpotential derart eingestellt wird, dass das Referenzsignal zu Null wird. Da die Aussteuerung der Bezugselektrode bis zur negativen Versorgungsspannungsgrenze erfolgen kann und das Messsignal und das Referenzsignal bis an die positive Versorgungsgrenze gehen kann, kann der Gleichtakterfassungsbereich durch die vorliegende Erfindung nahezu verdoppelt werden, ohne eine Änderung an der Spannungsversorgung vornehmen zu müssen.

Gemäß einer vorteilhaften Weiterbildung der vorliegenden Erfindung wird vorgeschlagen, dass die Kompensationsmittel ein an der Bezugselektrode anliegendes Bezugspotential in Abhängigkeit von dem Störpotential einstellen. Das an der Bezugselektrode tatsächlich anliegende Potential ergibt sich aus der Summe des Bezugspotentials und des Störpotentials. Vorzugsweise wird das Bezugspotential auf das negative Störpotential geregelt. Gemäß dieser Weiterbildung kann das Bezugspotential so eingestellt werden, dass das Störpotential kompensiert wird und an der Bezugselektrode im Idealfall tatsächlich nur ein Bezugspotential von 0 V (Ground) anliegt.

Erfindungsgemäß wird vorgeschlagen, dass die Kompensationsmittel ein an der Bezugselektrode anliegendes Bezugspotential derart einstellen, dass das Referenzsignal einen vorgebbaren Wert annimmt. Bei der erfindungsgemäßen Vorrichtung stellen die Kompensationsmittel das Bezugspotential derart ein, dass das Referenzsignal den Wert Null annimmt. Das Referenzsignal wird vorzugsweise auf den vorgebbaren Wert geregelt, indem des Bezugspotential in Abhängigkeit von dem Störsignal variiert wird.

Zum Regeln des Referenzsignals wird vorgeschlagen, dass die Kompensationsmittel ein Reglerelement zum Regeln eines an der Bezugselektrode anliegenden Bezugspotentials auf einen vorgebbaren Sollwert umfassen, wobei das Referenzsignal als Istwert und der Sollwert an dem Reglerelement anliegen.

Gemäß einer weiteren bevorzugten Ausführungsform der vorliegenden Erfindung wird vorgeschlagen, dass das Reglerelement als ein Operationsverstärker ausgebildet ist, an dessen nicht-invertierenden Eingang das Referenzsignal, an dessen invertierenden Eingang die Bezugsmasse und an dessen Ausgang das Bezugspotential anliegt.

Als eine weitere Lösung der Aufgabe der vorliegenden Erfindung wird ausgehend von dem Verfahren der eingangs geannnten Art vorgeschlagen, dass ein Störpotential, das sich zwischen der Bezugselektrode und der Messflüssigkeit einstellt, kompensiert wird.

Gemäß einer vorteilhaften Weiterbildung der Erfindung wird vorgeschlagen, dass ein an der Bezugselektrode anliegendes Bezugspotential in Abhängigkeit von dem Störpotential eingestellt wird. Gemäß einer bevorzugten Ausführungsform der vorliegenden Erfindung wird vorgeschlagen, dass ein an der Bezugselektrode anliegendes Bezugspotential derart eingestellt wird, dass das Referenzsignal einen vorgebbaren Wert annimmt. Das Bezugspotential wird vorteilhafterweise derart eingestellt, dass das Referenzsignal den Wert Null annimmt.

Gemäß einer weiteren bevorzugten Ausführungsform der vorliegenden Erfindung wird vorgeschlagen, dass ein an der Bezugselektrode anliegendes Bezugspotential in Abhängigkeit von dem Referenzsignal als Istwert und einem vorgebbaren Sollwert geregelt wird.

Von besonderer Bedeutung ist die Realisierung des erfindungsgemäßen Verfahrens in der Form eines Speicherelements, das für eine Steuerungseinheit einer Vorrichtung zum Messen des pH-Werts in einer Messflüssigkeit vorgesehen ist. Dabei ist auf dem Speicherelement ein Computerprogramm abgespeichert, das auf einem Rechengerät, insbesondere einem Mikroprozessor, der Steuerungseinheit ablauffähig und zur Ausführung des erfindungsgemäßen Verfahrens geeignet ist. In diesem Fall wird also die Erfindung durch ein auf dem Speicherelement abgespeichertes Computerprogramm realisiert, so dass dieses mit dem Computerprogramm versehene Speicherelement in gleicher Weise die Erfindung darstellt wie das Verfahren, zu dessen Ausführung das Computerprogramm geeignet ist. Als Speicherelement kann insbesondere ein elektrisches Speichermedium zur Anwendung kommen, bspw. ein Read-Only-Memory, ein Random-Access-Memory oder ein Flash-Memory.

Weitere Merkmale, Anwendungsmöglichkeiten und Vorteile der Erfindung ergeben sich aus der nachfolgenden Beschreibung von Ausführungsbeispielen der Erfindung. Es zeigen:

Figur 1     eine erfindungsgemäße Vorrichtung zum Messen einer Ionenkonzentration in einer Messflüssigkeit;

Figur 2     eine aus dem Stand der Technik bekannte Vorrichtung zum Messen einer Ionenkonzentration in einer Messflüssigkeit;

Figur 3     eine Steuerungseinheit für die Vorrichtung nach Figur 1; und

Figur 4     ein Blockdiagramm einer mit einem erfindungsgemäßen Messverfahren realisierten Regelung.

Eine aus dem Stand der Technik bekannte Vorrichtung 1 zum Messen einer Ionenkonzentration in einer Messflüssigkeit 2 ist anhand der Figur 2 in der Beschreibungseinleitung ausführlich beschrieben. Die Messvorrichtung 1 dient zur Messung des pH-Werts in der Messflüssigkeit 2. Der pH-Wert wird von einer Vielzahl in der Messflüssigkeit 2 gelöster Inhaltsstoffe bestimmt, bspw. von der Konzentration der $H^+$-Ionen oder der $OH^-$-Ionen.

Bei der bekannten Vorrichtung 1 werden aufgrund von elektrochemischen Störpotentialen zwischen einer Bezugselektrode 5 und der Messflüssigkeit 2 die in Spannungsfolgern 7, 8 und 9 zu verarbeitenden Signale $\varphi pH$ und $\varphi ref$ und ein Ausgangssignal aus einem Subtrahierer 6 um ein sich einstellendes Störpotential $\varphi chem$ angehoben. Das Störpotential $\varphi chem$ kann im Bereich von etwa +/- 1,4 V, in Extremfällen sogar im Bereich von +/- 2,8 V, liegen. Aufgrund des Störpotentials $\varphi chem$ kann es bei geringen Versorgungsspannungen, insbesondere bei Versorgungsspannungen von weniger als 4 V, dazu kommen, dass die Signale $\varphi pH$, $\varphi ref$ und/ oder das Ausgangssignal aus dem Subtrahierer 6 die Versorgungsspannungsgrenze erreichen und einfach abgeschnitten werden (sog. Clipping). Für den Fall, dass eine analoge Subtrahierschaltung die Differenz der beiden Potentiale $\varphi pH$, $\varphi ref$ bildet, kann ein nachfolgendes Meßinstrument oder ein nachfolgender A/D-Wandler keinen Unterschied zwischen einem kleiner werdenden pH-Wert und einem Abschneiden der Potentiale $\varphi pH$, $\varphi ref$ erkennen. Eine Messung ist dann nicht mehr möglich.

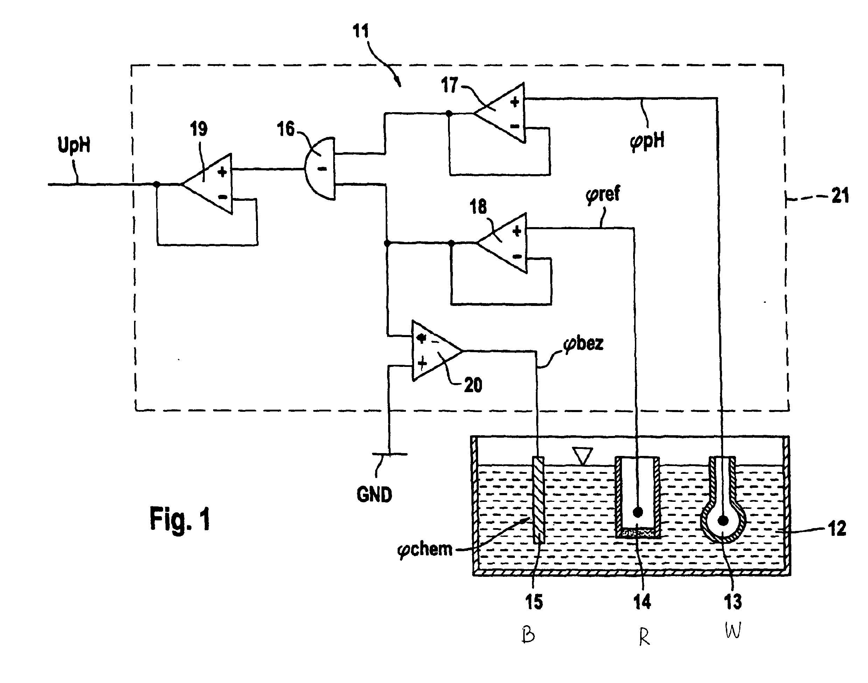

Zur Vermeidung dieser Probleme bei niedrigen Versorgungsspannungen wird eine in Figur 1 dargestellte erfindungsgemäße Messvorrichtung 11 vorgeschlagen. Die Vorrichtung 11 umfasst eine in einer Messflüssigkeit 12 angeordnete pH-sensitive Messelektrode 13, eine in der Messflüssigkeit 12 angeordnete Referenzelektrode 14 und eine in der Messflüssigkeit 12 angeordnete Bezugselektrode 15. Die Messelektrode 13 wird auch als pH-Halbzelle und die Referenzelektrode 14 als Referenzhalbzelle bezeichnet. Die Bezugselektrode 15 wird auch als Potential-Ausgleichs-Leitung (PAL) bezeichnet. Durch die Bezugselektrode 15 wird die Messflüssigkeit 12 auf ein vorgebbares Bezugspotential gelegt.

Die Vorrichtung 11 umfasst des weiteren einen Subtrahierer 16 zum Bilden eines auf die Bezugsmasse bezogenen Differenzsignals UpH aus der Differenz zwischen einem als Potential ausgebildeten Messsignal $\varphi pH$ der Messelektrode 13 und einem ebenfalls als Potential ausgebildeten Referenzsignal $\varphi ref$ der Referenzelektrode 14. Durch die Differenzbildung können Störeinflüsse eliminiert werden, so dass sie sich nicht auf das Differenzsignal UpH auswirken. Dadurch ergibt sich eine hohe Störunempfindlichkeit der erfindungsgemäßen Messvorrichtung 11. Das Differenzsignal UpH ist abhängig von der Ionenkonzentration in der Messflüssigkeit 12 bzw. dem pH-Wert der Messflüssigkeit 12. Das Messsignal $\varphi pH$ und das Referenzsignal $\varphi ref$ sind als Potentiale ausgebildet. Sie werden jeweils über einen als Impedanzwandler oder Spannungsfolger beschalteten Operationsverstärker 17 und 18 geführt. Das Ausgangssignal des Subtrahierers 16 wird ebenfalls über einen als Impedanzwandler oder Spannungsfolger beschalteten Operationsverstärker 19 geführt. Die Operationsverstärker 17, 18, 19 dienen zur Gleichtaktunterdrückung, d. h. zur Verringerung der Störanfälligkeit der Vorrichtung 11.

Bei der Vorrichtung 11 aus Figur 1 wird ein an der Bezugselektrode 15 anliegendes Bezugspotential $\varphi bez$ in Abhängigkeit von dem Störpotential $\varphi chem$ derart geregelt, dass das Referenzsignal $\varphi ref$ den Wert Null annimmt. Dazu weist die Vorrichtung 11 ein als Operationsverstärker 20 ausgebildetes Reglerelement auf, an dessen nicht-invertierenden Eingang (+) das Referenzsignal $\varphi ref$, an dessen invertierenden Eingang (-) die Bezugsmasse GND und an dessen Ausgang das Bezugspotential $\varphi bez$ anliegt.

Das Bezugspotential $\varphi bez$ wird also gegenläufig zu dem elektrochemischen Störpotential $\varphi chem$ nachgeregelt. Dadurch kann der Ursache des Clipping, nämlich das Erreichen der Versorgungsspannungsgrenze der Operationsverstärker 17, 18 und 20 infolge eines durch das Störpotential $\varphi chem$ verursachten Potentialanstiegs des Messsignals $\varphi pH$, des Referenzsignals $\varphi ref$

und des Ausgangssignals des Subtrahierers 16, wirksam entgegengewirkt werden. Zur Regelung des Bezugspotentials φbez wird das Referenzpotential φref an der Referenzelektrode 14 als 0 V definiert. Das Referenzpotential φref wird als Istwert dem nicht-invertierenden Eingang (+) des Operationsverstärkers 20 zugeführt. Als Sollwert von 0 V liegt an dem invertierenden Eingang (-) des Operationsverstärkers 20 eine Bezugsmasse GND an. Der Ausgang des Reglerelements 20 betreibt die Bezugselektrode 15.

Während des Betriebs der Vorrichtung 11 stellt sich an dem elektrischen Anschluß der Bezugselektrode 15 das Potential so ein, dass der elektrische Anschluß der Referenzelektrode 14 auf 0 V liegt. Damit steht an dem Anschluß der Messelektrode 13 ein idealerweise offsetfreies pHproportionales Messsignal φpH zur Verfügung. Die erfindungsgemäße Vorrichtung 11 kombiniert die Vorteile einer symmetrisch beschalteten Messzelle (hohe Störunempfindlichkeit) mit den Vorteilen einer unsymmetrischen Messzelle (geringer benötigter Messbereich).

Da die Aussteuerung der Bezugselektrode 15 bis zur negativen Versorgungsspannungsgrenze erfolgen kann, und das Messsignal φpH bzw. das Referenzsignal φref bis an die positive Versorgungsspannungsgrenze gehen kann, wird der Gleichtakterfassungsbereich durch die erfindungsgemäße Vorrichtung 11 nahezu verdoppelt ohne eine Änderung an der Spannungsversorgung vornehmen zu müssen.

Bei der erfindungsgemäßen Messvorrichtung 11 ergibt sich das Ausgangssignal UpH aus der Differenz des Messpotentials φpH und des Referenzpotentials φref. Das an dem Operationsverstärker 17 anliegende tatsächliche Messpotential φpH und das an dem Operationsverstärker 18 anliegende tatsächliche Referenzpotential φref ergeben sich wiederum aus den Gleichungen:

$$\varphi pH = \varphi'pH + \varphi bez + \varphi chem$$

$$\varphi ref = \varphi'ref + \varphi bez + \varphi chem,$$

wobei φ'pH und φ'ref die gemessenen Potentiale sind. Nach dem Stand der Technik ist das Bezugspotential φbez gleich 0 V (Ground GND), so dass sich die tatsächlichen Potentiale aus der Summe der gemessenen Potentiale und dem Störpotential ergeben. Erfindungsgemäß wird vorgeschlagen, das Bezugspotential φbez auf den negativen Wert des Störpotentials φchem zu regeln, so dass sie sich gegenseitig eliminieren und die tatsächlichen Potentiale φpH und φref den gemessenen Potentialen φ'pH und φ'ref entsprechen. Gemäß der vorliegenden Erfindung kann das Bezugspotential φbez auch auf den negativen Wert der Summe aus Störpotential φchem und gemessenem Referenzpotential φ'ref zu regeln, so dass das tatsächliche Referenzpotential φref auf den Wert Null geregelt wird.

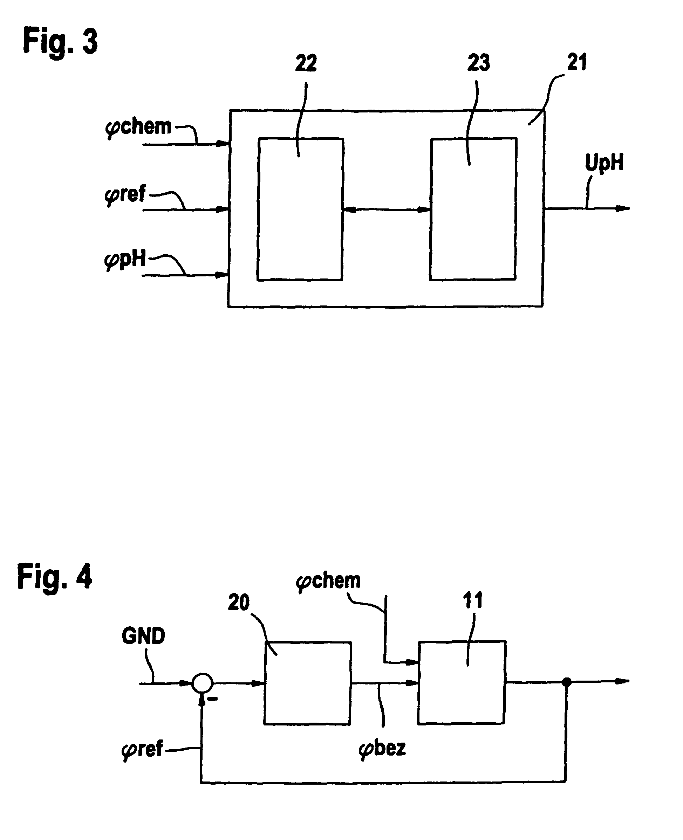

Erfindungsgemäß wird außerdem ein Speicherelement für eine Steuerungseinheit der Vorrichtung zum Messen des pH-Werts in der Messflüssigkeit 2 vorgeschlagen. Die Steuerungseinheit ist in Figur 1 durch eine gestrichelte Linie mit dem Bezugszeichen 21 symbolisch eingezeichnet. In Figur 3 ist der Aufbau der Steuerungseinheit 21 im Prinzip dargestellt. Die Steuerungseinheit 21 hat die Eingänge φchem, φref und φpH und liefert das Ausgangssignal UpH. Das Speicherelement ist mit dem Bezugszeichen 22 bezeichnet. Auf dem Speicherelement 22 ist ein Computerprogramm abgespeichert, das auf einem Rechengerät 23, insbesondere einem Mikroprozessor, der Steuerungseinheit 21 ablauffähig und zur Ausführung des erfindungsgemäßen Messverfahrens geeignet ist. Das Speicherelement 22 ist bspw. als ein Read-Only-Memory, ein Random-Access-Memory oder ein Flash-Memory ausgebildet.

In Figur 4 ist ein Blockdiagramm der mit dem erfindungsgemäßen Messverfahren realisierten Regelung dargestellt. Der Sollwert ist mit GND bezeichnet. Das gemessene Referenzsignal φref wird als Istwert herangezogen. Die Regeldifferenz GND-φref wird dem Regler 20 zugeführt, der eine entsprechende Stellgröße φbez generiert. Diese wird der Regelstrecke 11 zugeführt, auf die auch das Störpotential φchem wirkt. In der Regelstrecke 11 stellt sich dann eine entsprechende Regelgröße φref ein.

**Patentansprüche**

1. Symmetrisch beschaltete Vorrichtung (11) zum potentiometrischen Messen der Konzentration von Ionen, insbesondere von Wasserstoff (H⁺)-Ionen, in einer Messflüssigkeit (12),
   mit einer in der Messflüssigkeit (12) angeordneten pH-sensitiven Messelektrode (13), einer in der Messflüssigkeit (12) angeordneten Referenzelektrode (14),
   einer in der Messflüssigkeit (12) angeordneten Bezugselektrode (15), die die Messflüssigkeit (12) auf eine vorgebbare Bezugsmasse legt, und
   Mitteln (16) zum Bilden eines auf die Bezugsmasse bezogenen Differenzsignals aus der Differenz zwischen einem Messsignal (φpH) der Messelektrode (13) und einem Referenzsignal (φref) der Referenzelektrode (14),
   wobei das Differenzsignal abhängig ist von der Ionenkonzentration in der Messflüssigkeit (12),
   **dadurch gekennzeichnet, dass**
   die Vorrichtung (11) Kompensationsmittel (20) zum Kompensieren eines Störpotentials (φchem), das sich zwischen der Bezugselektrode (15) und der Messflüssigkeit (12) einstellt, aufweist,
   wobei die Kompensationsmittel (20) ein an der Bezugselektrode (15) anliegendes Bezugspotential

(φbez) derart einstellen, dass das Referenzsignal (φref) den Wert Null annimmt.

2. Messvorrichtung (11) nach Anspruch 1, **dadurch gekennzeichnet, dass** die Kompensationsmittel (20) ein an der Bezugselektrode (15) anliegendes Bezugspotential (φbez) in Abhängigkeit von dem Störpotential (φchem) einstellen.

3. Messvorrichtung (11) nach einem der Ansprüche 1 oder 2, **dadurch gekennzeichnet, dass** die Kompensationsmittel (20) ein Reglerelement zum Regeln eines an der Bezugselektrode (15) anliegenden Bezugspotentials (φbez) auf einen vorgebbaren Sollwert (GND) umfassen, wobei das Referenzsignal (φref) als Istwert und der Sollwert (GND) an dem Reglerelement anliegen.

4. Messvorrichtung (11) nach Anspruch 3, **dadurch gekennzeichnet, dass** das Reglerelement als ein Operationsverstärker ausgebildet ist, an dessen nichtinvertierenden Eingang (+) das Referenzsignal (φref), an dessen invertierenden Eingang (-) die Bezugsmasse (GND) und an dessen Ausgang das Bezugspotential (φbez) anliegt.

5. Verfahren zum potentiometrischen Messen des pH-Werts in einer Messflüssigkeit (12), bei dem von einer in der Messflüssigkeit (12) angeordneten pH-sensitiven Messelektrode (13) ein Messsignal (φpH) und von einer in der Messflüssigkeit (12) angeordneten Referenzelektrode (14) ein Referenzsignal (φref) aufgenommen wird, die Messflüssigkeit (12) von einer in der Messflüssigkeit (12) angeordneten Bezugselektrode (15) auf eine vorgebbare Bezugsmasse gelegt wird und aus der Differenz zwischen dem Messsignal (φpH) und dem Referenzsignal (φref) ein auf die Bezugsmasse bezogenes und vom pH-Wert in der Messflüssigkeit (12) abhängiges Differenzsignal gebildet wird, **dadurch gekennzeichnet, dass** ein Störpotential (φchem), das sich zwischen der Bezugselektrode (15) und der Messflüssigkeit (12) einstellt, kompensiert wird.

6. Verfahren nach Anspruch 5, **dadurch gekennzeichnet, dass** ein an der Bezugselektrode (15) anliegendes Bezugspotential (φbez) in Abhängigkeit von dem Störpotential (φchem) eingestellt wird.

7. Verfahren nach Anspruch 5 oder 6, **dadurch gekennzeichnet, dass** ein an der Bezugselektrode (15) anliegendes Bezugspotential (φbez) derart eingestellt wird, dass das Referenzsignal (φref) einen vorgebbaren Wert annimmt.

8. Verfahren nach Anspruch 7, **dadurch gekennzeichnet, dass** das Bezugspotential (φbez) derart eingestellt wird, dass das Referenzsignal (φref) den Wert Null annimmt.

9. Verfahren nach einem der Ansprüche 5 bis 8, **dadurch gekennzeichnet, dass** ein an der Bezugselektrode (15) anliegendes Bezugspotential (φbez) in Abhängigkeit von dem Referenzsignal (φref) als Istwert und einem vorgebbaren Sollwert (GND) geregelt wird.

10. Speicherelement (22), insbesondere Read-Only-Memory, Random-Access-Memory oder Flash-Memory, für eine Steuerungseinheit (21) einer Vorrichtung (11) zum Messen des pH-Werts in einer Messflüssigkeit (12), auf dem ein Computerprogramm abgespeichert ist, das auf einem Rechengerät (23), insbesondere einem Mikroprozessor, der Steuerungseinheit (21) ablauffähig und zur Ausführung eines Verfahrens nach einem der Ansprüche 5 bis 9 geeignet ist.

**Claims**

1. A symmetrically connected device (11) for the potentiometric measurement of the concentration of ions, particularly of hydrogen (H⁺) ions, in a measurement liquid (12),
   with a pH-sensitive measuring electrode (13) located in the measurement liquid (12), a reference electrode (14) located in the measurement liquid (12),
   a reference electrode (15) located in the measurement liquid (12) which places the measurement liquid (12) at a predefinable ground reference,
   and means (16) for forming a differential signal, which is referenced to the ground reference, from the difference between a measuring signal (φpH) of the measuring electrode (13) and a reference signal (φref) of the reference electrode (14),
   where the differential signal depends on the concentration of ions in the measurement liquid (12),
   **characterized in that** the device (11) exhibits means (20) for compensating for an interference potential (φDchem) that occurs between the reference electrode (15) and the measurement liquid (12),
   where the means for compensation (20) set a reference potential (φDbez) which is applied to the reference electrode (15) such that the reference signal (φDref) assumes the value zero.

2. Measuring device (11) as per Claim 1, **characterized in that** the means for compensation (20) set a reference potential (φpbez) which is applied to the reference electrode (15) depending on the interference potential (φchem).

**3.** Measuring device (11) as per one of the Claims 1 or 2, **characterized in that** the means for compensation (20) comprise a control element for adjusting a reference potential ($\varphi$bez) present at the reference electrode (15) to a predefinable set value (GND), with the reference signal ($\varphi$ref) as the actual value and the set value (GND) being present at the control element.

**4.** Measuring device (11) as per Claim 3, **characterized in that** the control element is designed as an operational amplifier, with the reference signal ($\varphi$ref) being present at the non-inverting input (+) of said operational amplifier, the ground reference (GND) being present at the inverting input (-) of said operational amplifier, and the reference potential ($\varphi$bez) being present at the output of said operational amplifier.

**5.** Method for the potentiometric measurement of the pH value in a measuring liquid (12) according to which a measuring signal ($\varphi$pH) is recorded by a pH-sensitive measuring electrode (13) located in the measuring liquid (12); and a reference signal ($\varphi$ref) is recorded by a reference electrode (14) located in the measuring liquid; the measuring liquid (12) is set to a predefinable reference ground by a reference electrode (15) located in the measuring liquid (12); and a differential signal is formed from the difference between the measuring signal ($\varphi$pH) and the reference signal ($\varphi$ref), said differential signal being referenced to the reference ground and dependent on the pH value in the measuring liquid (12), **characterized in that** the method compensates for an interference potential ($\varphi$chem) that forms between the reference electrode (15) and the measuring liquid (12).

**6.** Method as per Claim 5, **characterized in that** a reference potential ($\varphi$bez) present at the reference electrode (15) is set depending on the interference potential ($\varphi$chem).

**7.** Method as per Claim 5 or 6, **characterized in that** a reference potential ($\varphi$bez) present at the reference electrode (15) is set such that the reference signal ($\varphi$ref) assumes a predefinable value.

**8.** Method as per Claim 7, **characterized in that** the reference potential ($\varphi$bez) is set in such a way that the reference signal ($\varphi$ref) assumes the value zero.

**9.** Method as per Claims 5 to 8, **characterized in that** a reference potential ($\varphi$bez) present at the reference electrode (15) is regulated depending on the reference signal ($\varphi$ref) as the actual value and a predefinable set value (GND).

**10.** Memory element (22), particularly a read-only memory, random access memory or flash memory, for a control unit (21) of a device (11) for measuring the pH value in a measuring liquid (12) on which a computer program is saved, said program being executable on a computer (23), particularly a microprocessor, of the control unit (21) and being suitable for executing a method as claimed in one of the Claims 5 to 9.

**Revendications**

**1.** Dispositif (11) symétrique destiné à la mesure potentiométrique de la concentration d'ions, notamment d'ions d'hydrogène (H+), dans un liquide de mesure (12),
avec une électrode de mesure (13) sensible au pH disposée dans le liquide de mesure (12), une électrode de référence (14) disposée dans le liquide de mesure (12), une électrode de référence (15) disposée dans le liquide de mesure (12), qui met le liquide de mesure (12) à une masse de référence prédéfinissable, et des moyens (16) destinés à la formation d'un signal différentiel se rapportant à la masse de référence, signal issu de la différence entre un signal de mesure ($\varphi$pH) de l'électrode de mesure (13) et un signal de référence ($\varphi$ref) de l'électrode de référence (14),
le signal différentiel étant fonction de la concentration d'ions dans le liquide de mesure (12),
**caractérisé en ce que**
le dispositif (11) comporte des moyens de compensation (20) destinés à la compensation d'un potentiel parasite ($\varphi$chem), qui s'établit entre l'électrode de référence (15) et le liquide de mesure (12),
les moyens de compensation (20) réglant un potentiel de référence ($\varphi$bez) appliqué à l'électrode de référence (15), de telle manière que le signal de référence ($\varphi$ref) prenne la valeur zéro.

**2.** Dispositif de mesure (11) selon la revendication 1, **caractérisé en ce que** les moyens de compensation (20) règlent un potentiel de référence ($\varphi$bez) appliqué à l'électrode de référence (15) en fonction du potentiel parasite ($\varphi$chem).

**3.** Dispositif de mesure (11) selon l'une des revendications 1 ou 2,
**caractérisé en ce que** les moyens de compensation (20) comprennent un élément régulateur destiné à la régulation d'un potentiel de référence ($\varphi$bez) appliqué à l'électrode de référence (15) par rapport à une valeur de consigne (GND) prédéfinissable, le signal de référence ($\varphi$ref) en tant que valeur réelle et la valeur de consigne (GND) étant appliqués à l'élément régulateur.

**4.** Dispositif de mesure (11) selon la revendication 3, **caractérisé en ce que** l'élément régulateur est constitué d'un amplificateur opérationnel auquel est appliqué à son entrée non inverseuse (+) le signal de référence (φref), à son entrée inverseuse (-) la masse de référence (GND) et à sa sortie le potentiel de référence (φbez).

**5.** Procédé destiné à la mesure potentiométrique du pH dans un liquide de mesure (12), pour lequel est enregistré un signal de mesure (φpH) par une électrode de mesure (13) sensible au pH, disposée dans le liquide de mesure (12), et un signal de référence (φref) par une électrode de référence (14) disposée dans le liquide de mesure (12), le liquide de mesure (12) étant mis à une masse de référence prédéfinissable par une électrode de référence (15) disposée dans le liquide de mesure (12), et une différence étant formée entre le signal de mesure (φpH) et le signal de référence (φref), laquelle se rapporte à la masse de référence et est fonction du pH dans le liquide de mesure (12), **caractérisé en ce qu'**un signal parasite (φchem), qui s'établit entre l'électrode de référence (15) et le liquide de mesure (12), est compensé.

**6.** Procédé selon la revendication 5, **caractérisé en ce qu'**un potentiel de référence (φbez) appliqué à l'électrode de référence (15) est réglé en fonction du potentiel parasite (φchem).

**7.** Procédé selon la revendication 5 ou 6, **caractérisé en ce qu'**un potentiel de référence (φbez) appliqué à l'électrode de référence (15) est réglé de telle manière que le signal de référence (φref) prenne une valeur prédéfinissable.

**8.** Procédé selon la revendication 7, **caractérisé en ce que** le potentiel de référence (φbez) est réglé de telle manière qu'un signal de référence (φref) prenne la valeur zéro.

**9.** Procédé selon l'une des revendications 5 à 8, **caractérisé en ce qu'**un potentiel de référence (φbez) appliqué à l'électrode de référence (15) est régulé en fonction du signal de référence (φret) en tant que valeur réelle et en fonction d'une valeur de consigne (GND) prédéfinissable.

**10.** Élément de mémoire (22), notamment une mémoire morte, une mémoire vive ou une mémoire flash, pour une unité de commande (21) d'un dispositif (11) destiné à la mesure du pH dans un liquide de mesure (12), sur laquelle est mémorisée un programme d'ordinateur, exécutable sur un calculateur (23), notamment un microprocesseur, de l'unité de commande (21), et qui convient pour l'exécution d'un procédé selon l'une des revendications 5 à 9.

**Fig. 1**

Fig. 2

STAND DER TECHNIK

# Fig. 3

# Fig. 4